# FASCICULE DE BREVET EUROPEEN

(11) **EP 4 493 317 B1**
(45) Date de publication et mention de la délivrance du brevet: **25.02.2026**
(21) Numéro de dépôt: 23708826.5
(22) Date de dépôt: 08.03.2023
(51) Int. Cl.: B01J 27/047, B01J 27/051, B01J 23/28, B01J 23/30, B01J 21/06, B01J 27/14, B01J 21/02, B01J 21/18, B01J 23/48, B01J 23/755, B01J 23/08, B01J 23/14, B01J 37/02, B01J 37/20, C25B 1/02, C25B 1/04, C25B 1/27, C25B 3/07, H01M 8/00

(54) **MATÉRIAU CATALYTIQUE À BASE D'UN ÉLÉMENT DU GROUPE VIB ET D'UN ÉLÉMENT DU GROUPE IVB POUR LA PRODUCTION D'HYDROGÈNE PAR ÉLECTROLYSE DE L'EAU**
KATALYSATORMATERIAL AUF BASIS EINES GRUPPE-VIB-ELEMENTS UND GRUPPE-IVB-ELEMENT ZUR HERSTELLUNG VON WASSERSTOFF DURCH WASSERELEKTROLYSE
CATALYTIC MATERIAL BASED ON A GROUP VIB ELEMENT AND A GROUP IVB ELEMENT FOR THE PRODUCTION OF HYDROGEN BY ELECTROLYSIS OF WATER

(30) Priorité: 18.03.2022 FR 2202406
(43) Date de publication de la demande: 22.01.2025
(73) Titulaire: IFP Energies nouvelles, 92500 Rueil-Malmaison (FR); Ecole Normale Supérieure de Lyon, 69007 Lyon (FR); Centre National de la Recherche Scientifique (CNRS), 75016 Paris (FR); UNIVERSITE CLAUDE BERNARD - LYON 1, 69100 Villeurbanne (FR); Grenoble INP (Institut Polytechnique de Grenoble), 38000 Grenoble (FR); Université Savoie Mont Blanc, 73000 Chambéry (FR); Université Grenoble Alpes, 38400 Saint-Martin-d'Hères (FR)
(72) Inventeur: BONDUELLE, Audrey, 92852 Rueil-Malmaison Cedex (FR); OBADIA, Mona Marie, 92852 Rueil-Malmaison Cedex (FR); CACCIUTTOLO, Quentin, 92852 Rueil-Malmaison Cedex (FR); STEINMANN, Stephan, 69100 Villeurbanne (FR); ABIDI, Nawras, 69200 Vénissieux (FR); DUBAU, Laetitia, 38000 Grenoble (FR); SIBERT, Eric, 38400 Saint-Martin-d'Hères (FR)
(74) Mandataire: IFP Energies nouvelles
(86) Numéro de dépôt international: PCT/EP2023/055823
(87) Numéro de publication internationale: WO 2023/174768

(56) Documents cités:
- CN-B- 110 252 345
- US-A1- 2022 018 033

## Description

### Domaine technique

La présente invention concerne le domaine des électrodes aptes à être utilisées pour des réactions de réduction électrochimique, en particulier pour l'électrolyse de l'eau en milieu électrolytique liquide afin de produire de l'hydrogène.

### Etat de la technique

Le dihydrogène est aujourd'hui un vecteur énergétique incontournable de la transition énergétique. Il est nécessaire de produire du dihydrogène avec une faible émission de gaz à effet de serre pour les applications actuelles dans l'industrie (raffinerie, production d'ammoniaque, procédé d'hydrogénation ou de réduction). Par exemple, il peut être utilisé pour des applications mobilité (voiture, transport lourd, ferroviaire, aviation), pour remplacer le méthane dans les fours de combustion (la combustion de I'H₂ ne produit en effet que de l'eau) ou pour stocker l'énergie intermittente solaire ou éolienne. L'une des technologies pour produire de l'hydrogène décarboné est l'électrolyse de l'eau. Dans une cellule d'électrolyse de l'eau, la réaction d'évolution de l'hydrogène (HER ou *Hydrogen Evolution Reaction* selon la terminologie anglo-saxonne) se produit à la cathode et la réaction d'évolution de l'oxygène (OER ou *Oxydation Evolution Reaction* selon la terminologie anglo-saxonne) à l'anode. La réaction globale est :

H₂O → H₂ + 1/2 O₂

Le potentiel de la réaction électrochimique de réduction des protons est de 0 V/ENH, ENH étant l'électrode normale à hydrogène, une électrode de référence. Ce potentiel représente l'énergie thermodynamique nécessaire à la réduction. Cependant, il faut ajouter à cette énergie minimum thermodynamique des surtensions liées à l'activation de la réaction par le matériau à l'interface entre les électrons, les protons et où le gaz peut se former. Aujourd'hui, le matériau le plus utilisé pour ce travail d'électrocatalyseur et dans le cas des électrolyseurs de type membrane échangeuse de protons (PEM ou Proton Exchange Membrane selon la terminologie anglo-saxonne) est le platine. Si les propriétés électrocatalytiques sont excellentes, le platine est cependant cher et peu abondant. Un gros effort de recherche est aujourd'hui réalisé pour remplacer le platine par un matériau plus abondant et moins cher mais avec des propriétés catalytiques identiques voire meilleures.

Les catalyseurs à base de métaux de la colonne VIB du tableau périodique dont fait partie MoS₂ sont des catalyseurs d'intérêt pour les réactions d'électroréduction, en particulier pour la production de H₂. Les demandes US2022/0018033 et US2022/010439 divulguent différentes voies de préparation de catalyseurs avec au moins un précurseur de phase active à base d'un métal du groupe VIB et optionnellement au moins un précurseur de phase active d'un métal du groupe VIII.

Les matériaux à base de MoS₂ ont une structure lamellaire présentant des propriétés électrocatalytiques en HER. Les phases actives peuvent être utilisées sous forme massique lorsque la conduction des électrons depuis la cathode est suffisante ou bien à l'état supporté, mettant alors en jeu un support de nature différente. Dans ce dernier cas, le support doit avoir des propriétés spécifiques :
- grande surface spécifique pour promouvoir la dispersion de la phase active ;
- très bonne conductivité électronique ;
- stabilité chimique et électrochimique dans les conditions d'électrolyse de l'eau.

Le carbone est le support le plus couramment utilisé pour les électrolyseurs de type PEM.

Cependant, le MoS₂ seul reste moins efficace que le platine pour la réaction d'intérêt. Par exemple Y. Zhao *et al.* Sc. Reports, 5, 8722 reporte une surtension avec le platine de 50 mV et une surtension de 220 mV pour un MoS₂ sous forme de nanofeuillets sur des feuillets de graphène. Plusieurs stratégies peuvent être développées pour abaisser les surtensions d'un catalyseur à base de MoS₂. Par exemple, Il est admis qu'un catalyseur présentant un fort potentiel catalytique se caractérise par une phase active associée parfaitement dispersée à la surface du support et présentant une teneur en phase active élevée. Cependant, une fois que le catalyseur est parfaitement dispersé, les propriétés électrocatalytiques de celui-ci sont limitées par ses propriétés intrinsèques.

Pour améliorer ses propriétés intrinsèques, le MoS₂ peut être promu par de nombreux dopants. Le document CN111847513 divulgue des dopants tels que le vanadium, le chrome, le manganèse, le rhénium, l'iridium, le platine ou l'or ou un métalloïde tel que fluor, l'oxygène, le sélénium, le tellure, l'azote, le phosphore, le carbone ou le bore. De même le document CN110479311 inclut des matériaux composites MoS₂/graphène où le MoS₂ est dopé avec au moins un des éléments suivants : le vanadium, le chrome, le manganèse, le fer, le cobalt, le nickel, le cuivre, le zinc, le ruthénium, le rhodium, le palladium, l'argent, le cadmium, le platine ou l'or. D'autres documents de l'art antérieur sont plus spécifiques à l'ajout d'un seul ou deux hétéroatomes dopant le sulfure de molybdène ou formant un composite avec celui-ci :
- le cobalt : CN107881529 divulgue un catalyseur comprenant une phase de disulfure de cobalt, CN110026210 divulgue un catalyseur C-N/Co₄S₃/MoS₂, CN109046409 concerne un catalyseur avec des nanofeuillets de phosphure de cobalt et du sulfure de molybdène sur des nanotubes de carbone, CN113668008 décrit un catalyseur Co-MoS₂ sur nanotubes de carbone, CN113061928 divulgue un catalyseur à base de nanofeuillets de sulfure de molybdène et de nanoparticules de sulfure de cobalt, CN107904620 décrit un catalyseur sur un support en 3D (avec du graphène et des nanotubes de carbone) et un composite sulfure de molybdène/sulfure de cobalt, et CN109796044 divulgue un catalyseur à base de cobalt sulfure de molybdène supporté sur du palladium.
- le nickel : CN108517534 divulgue un sulfure de molybdène dopé au nickel, CN108441879 décrit un composite de sulfure de molybdène, de nickel nanoporeux et de graphène, CN105655140 présente un composite sulfure de molybdène, sulfure de nickel et graphène sous forme de flocons, CN111992227 divulgue un composite nickel, cobalt et sulfure de molybdène et CN110327946 divulgue un composite sulfure de molybdène et nickel séléniure.
- le vanadium : CN109939699 présente un catalyseur de sulfure de molybdène dopé au vanadium en forme de fleur, CN107574454 décrit un composite sulfure de molybdène et nanotubes de dioxyde de vanadium dopé au tungstène,
- le fer : US2021/170384 décrit des nanofeuillets de sulfure de molybdène avec des nanoparticules de phosphure de fer dispersées,
- l'or : CN108654647 divulgue un sulfure de molybdène avec des nanoparticules d'or,
- le cadmium : CN111229260 divulgue un catalyseur à base de sulfure de molybdène et de cadmium,
- l'azote qui peut être utilisé pour doper le support carbone comme décrit précédemment mais qui peut aussi former des nitrures avec le sulfure de molybdène. Par exemple, CN109161919 et CN113846347 divulguent un catalyseur formé de nitrures de carbone et d'un le binaire sulfure de molybdène nitrure et avec du nitrure de molybdène, respectivement.

Les catalyseurs à base de sulfure de molybdène qui contiennent des éléments du groupe IVB du tableau périodique ont peu été étudiés. Seul des catalyseurs avec du sulfure de molybdène et avec la présence de titane sont décrits dans la littérature. Le plus souvent le titane se trouve dans le substrat comme l'ont décrit M. Medina et al. J. Braz. Chem. Soc. 30 2210, E. Girel et al. Catalyst Today 292, 154, A. Jagminas et al. Metals 10, 1251 et A. Tahira et al. ACS Appl. Energy Mater. 3, 2053 et qui font l'objet des demandes CN109097790 dans lequel des fils de titane sont utilisés comme support de fibres de carbone, CN102849798 où le substrat peut être du carbone, du molybdène, du tungstène, de l'argent, du cuivre ou du titane et CN113755827 avec un cristal de sulfure de molybdène se basant sur un réseau de titane. Il peut aussi former des matériaux composites avec le sulfure de molybdène. K.M. Alaqad *et al.* 47, 2366, Y. Kim et al. Advanced Functional Materials, 27 1701825 et J. Liang et al. ACS Appl. Mater. Interfaces 10, 6084 étudient les propriétés catalytiques d'un composite TiO₂/MoS₂ avec différentes microstructures. Un composite de la même famille fait aussi l'objet de la demande CN110252345. Ici le composite est formé de graphène, de sulfure de molybdène et de dioxyde de titane avec une structure en accordéon. Enfin, J. Liu et al. Applied Catalyst B : Environmental 241, 89 décrivent des hybrides MoS₂/Ti₃C₂Tₓ avec de très bonnes activités électrocatalytiques.

Finalement, aucun catalyseur avec du MoS₂ ou un autre métal de la colonne VIB du tableau périodique dopé avec du titane ou un autre élément du groupe IVB n'est décrit dans la littérature.

La Demanderesse a mis au point un nouveau procédé de préparation d'un matériau catalytique permettant d'obtenir une électrode utilisable dans une cellule électrolytique pour la réalisation de réaction de réduction électrochimique, et plus particulièrement permettant d'obtenir une cathode utilisable dans une cellule électrolytique pour la production d'hydrogène par électrolyse de l'eau. En effet, la Demanderesse a découvert de manière surprenante que le dépôt d'au moins un métal du groupe VIB en présence d'au moins un métal du groupe IVB sur un support électro-conducteur permet d'obtenir un matériau catalytique présentant des performances catalytiques au moins aussi bonnes, voire meilleures, que celles obtenues en utilisant des matériaux catalytiques selon l'art antérieur, notamment lorsque ce dernier est utilisé en tant que phase catalytique d'une électrode pour des réactions de réduction électrochimique, et cela encore plus particulièrement lorsque le matériau catalytique est utilisé en tant que phase catalytique d'une cathode pour la production d'hydrogène par électrolyse de l'eau.

### Objets de l'invention

Un premier objet selon l'invention concerne un matériau catalytique comprenant une phase active comprenant au moins un métal du groupe VIB au moins en partie sous forme sulfurée, au moins un métal du groupe IVB au moins en partie sous forme sulfurée, et un support électro-conducteur dans lequel ledit métal du groupe VIB est choisi parmi le molybdène et/ou le tungstène, ledit métal du groupe IVB est choisi parmi le titane, le zirconium et/ou l'hafnium.

Selon un ou plusieurs modes de réalisation, lorsque le métal du groupe VIB est le molybdène, la teneur en molybdène est comprise entre 4 et 60% poids en élément molybdène par rapport au poids du matériau catalytique.

Selon un ou plusieurs modes de réalisation, lorsque le métal du groupe VIB est le tungstène, la teneur en tungstène est comprise entre 7 et 70% poids en élément tungstène par rapport au poids du matériau catalytique.

Selon un ou plusieurs modes de réalisation, la teneur en métal du groupe IVB est avantageusement comprises entre 0,1 et 25% poids en élément du groupe IVB par rapport au poids total du matériau catalytique.

Selon un ou plusieurs modes de réalisation, la phase active est choisie dans le groupe formé par les combinaisons des éléments titane-molybdène, zirconium-molybdène, hafnium-molybdène, titane-zirconium-molybdène, titane-hafnium-molybdène, zirconium-hafnium-molybdène, titane-tungstène, zirconium-tungstène, hafnium- tungstène, titane-zirconium-tungstène, titane-hafnium-tungstène, zirconium-hafnium-tungstène, titane-molybdène-tungstène, zirconium-molybdène-tungstène, et hafnium-molybdène-tungstène.

Selon un ou plusieurs modes de réalisation, ledit matériau catalytique comprend en outre au moins un matériau dopant choisi parmi le bore, le phosphore et le silicium.

Selon un ou plusieurs modes de réalisation, le support électro-conducteur est choisi parmi :
- le noir de carbone, le graphite, les nanotubes de carbone, et le graphène ;
- le nickel, l'or, le cuivre, l'argent, le titane, et le silicium ;
- le dioxyde d'étain dopé au fluor, et l'oxyde d'indium et d'étain.

Selon un ou plusieurs modes de réalisation, le support du matériau catalytique présente une surface spécifique supérieure à 75 m²/g.

Un autre objet selon l'invention concerne un procédé de préparation d'un matériau catalytique selon l'invention, ledit procédé comprend au moins les étapes suivantes :
a) une étape de mise en contact dudit support par au moins une solution contenant au moins un précurseur d'au moins un métal du groupe VIB ;
b) une étape de mise en contact dudit support par au moins une solution contenant au moins un précurseur d'au moins un métal du groupe IVB ;
les étapes a) et b) étant réalisées dans un ordre indifférent ou simultanément ;
c) une étape de séchage à l'issue de l'enchainement des étapes a) et b) ou b) et a), à une température inférieure à 250°C, sans étape de calcination ultérieure ;
d) une étape de sulfuration du matériau obtenu à l'issue de l'étape c) à une température comprise entre 100°C et 600°C.

Selon un ou plusieurs modes de réalisation, ledit précurseur d'au moins un métal du groupe VIB est choisi parmi :
les polyoxométallates répondant à la formule (HₕXₓMₘO_{y})^{q-} dans laquelle H est l'hydrogène, X est un élément choisi parmi le phosphore (P), le silicium (Si), le bore (B), ledit élément étant pris seul, M est un ou plusieurs élément(s) choisi(s) parmi le molybdène (Mo), le tungstène (W), O étant l'oxygène, h étant un entier compris entre 0 et 12, x étant un entier compris entre 0 et 4, m étant un entier égal à 5, 6, 7, 8, 9, 10, 11, 12 ou 18, y étant un entier compris entre 17 et 72 et q étant un entier compris entre 1 et 20 ;
les sels de précurseurs des éléments du groupe VIB ; et
les précurseurs organiques ou inorganiques à base de Mo ou de W.

Selon un ou plusieurs modes de réalisation, ledit précurseur d'au moins un métal du groupe IVB est choisi parmi les alcoxydes de zirconium, d'hafnium et de titane, l'hydroxyde de zirconium, l'hydroxyde de hafnium, l'oxalate de hafnium, le nitrate de hafnium et le sulfate de hafnium.

Selon un ou plusieurs modes de réalisation, on réalise une étape de maturation après l'étape a) et/ou b), et avant l'étape c), à une température comprise entre 10 et 50°C pendant une durée inférieure à 48 heures.

Selon un ou plusieurs modes de réalisation, l'étape de séchage c) est réalisée à une température comprise entre 70°C et 180°C.

Un autre objet selon l'invention concerne un procédé de préparation d'une électrode comprenant au moins les étapes suivantes :
1) on dissout dans un solvant ou un mélange de solvant, au moins un liant polymère conducteur ionique ;
2) on ajoute à la solution obtenue à l'étape 1) au moins un matériau catalytique selon l'invention ou un matériau catalytique obtenu selon le procédé de préparation selon l'invention, sous forme de poudre, pour obtenir un mélange ;
les étapes 1) et 2) étant réalisées dans un ordre indifférent, ou simultanément ;
3) on dépose sur un support ou collecteur conducteur métallique le mélange obtenu à l'étape 2).

Un autre objet selon l'invention concerne un dispositif d'électrolyse comprenant une anode, une cathode, un électrolyte, ledit dispositif étant caractérisé en ce que l'une au moins de l'anode ou de la cathode est une électrode obtenue selon le procédé de préparation selon l'invention.

Un autre objet selon l'invention concerne l'utilisation du dispositif d'électrolyse selon l'invention dans des réactions électrochimiques, dans lequel ledit dispositif est utilisé en tant que :
- dispositif d'électrolyse de l'eau pour la production d'un mélange gazeux d'hydrogène et d'oxygène et/ou la production d'hydrogène seul ;
- dispositif d'électrolyse du dioxyde de carbone pour la production d'acide formique ;
- dispositif d'électrolyse de l'azote pour la production d'ammoniac ;
- dispositif de pile à combustible pour la production d'électricité à partir d'hydrogène et d'oxygène.

### Description détaillée de l'invention

### Définitions

Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe IVB selon la classification CAS correspond aux métaux de la colonne 4 (par exemple Ti, Zr et Hf) selon la nouvelle classification IUPAC, et le groupe VIII (ou VIIIB) selon la classification CAS correspond aux métaux des colonnes 8, 9 et 10 selon la nouvelle classification IUPAC.

On entend par surface BET, la surface spécifique déterminée par adsorption d'azote conformément à la norme ASTM D 3663-78 établie à partir de la méthode BRUNAUER - EMMET - TELLER décrite dans le périodique "The journal of the American Chemical Society", 60, 309 (1938).

### Procédé de préparation

Le procédé de préparation d'un matériau catalytique d'une électrode pour des réactions de réduction électrochimique, ledit matériau comprenant une phase active à base d'au moins un métal du groupe VIB, d'au moins un métal du groupe IVB et un support électro-conducteur, comprend au moins les étapes suivantes :
a) une étape de mise en contact dudit support par au moins une solution contenant au moins un précurseur d'au moins un métal du groupe VIB ;
b) une étape de mise en contact dudit support par au moins une solution contenant au moins un précurseur d'au moins un métal du groupe IVB ;
les étapes a) et b) étant réalisées dans un ordre indifférent ou simultanément ;
c) une étape de séchage à l'issue de l'enchainement des étapes a) et b) ou b) et a), à une température inférieure à 250°C, sans étape de calcination ultérieure ;
d) une étape de sulfuration du matériau obtenu à l'issue de l'étape c) à une température comprise entre 100°C et 600°C.

### Étape a)

Conformément à l'étape a) du procédé de préparation selon l'invention, on réalise au moins une étape de mise en contact du support par au moins une solution contenant au moins un précurseur de la phase active comprenant au moins un métal du groupe VIB. Avantageusement, l'étape de mise en contact du support avec au moins un précurseur de la phase active comprenant au moins un métal du groupe VIB avec le support, conformément à la mise en œuvre de l'étape a), peut être réalisé par imprégnation, à sec ou en excès, ou encore par dépôt - précipitation, selon des méthodes bien connues de l'Homme du métier. De manière préférée, ladite étape a) est réalisée par imprégnation à sec, laquelle consiste à mettre en contact le support avec une solution, contenant au moins un précurseur comprenant un groupe VIB, dont le volume de la solution est compris entre 0,25 et 1,5 fois le volume poreux du support à imprégner.

### Précurseurs comprenant au moins un métal du groupe VIB

Les précurseurs comprenant au moins un métal du groupe VIB peuvent être choisis parmi tous les précurseurs des éléments du groupe VIB connus de l'Homme de l'Art. Ils peuvent être choisis parmi les polyoxométallates (POM) ou les sels de précurseurs des éléments du groupe VIB, tels que les molybdates, les thiomolybdates, les tungstates ou encore les thiotungstates. Ils peuvent être choisis parmi les oxydes du groupe VIB. Ils peuvent être choisis parmi les précurseurs organiques ou inorganiques, tels que le MoCl₅ ou le WCl₄ ou le WCl₆ ou les alcoxydes de Mo ou de W, par exemple Mo(OEt)₅ ou W(OEt)₅.

Dans le cadre de la présente invention, on entend par polyoxométallates (POM) comme étant les composés répondant à la formule (HₕXₓMₘO_{y})^{q-} dans laquelle H est l'hydrogène, X est un élément choisi parmi le phosphore (P), le silicium (Si) et le bore (B), ledit élément étant pris seul, M est un ou plusieurs élément(s) choisi(s) parmi le molybdène (Mo) et/ou le tungstène (W), O étant l'oxygène, h étant un entier compris entre 0 et 12, x étant un entier compris entre 0 et 4, m étant un entier égal à 5, 6, 7, 8, 9, 10, 11, 12 ou 18, y étant un entier compris entre 17 et 72 et q étant un entier compris entre 1 et 20.

Les polyoxométallates définis selon l'invention englobent deux familles de composés, les isopolyanions et les hétéropolyanions. Ces deux familles de composés sont définies dans l'article Heteropoly and Isopoly Oxométallates, Pope, Ed Springer-Verlag, 1983.

Les isopolyanions qui peuvent être utilisés dans la présente invention sont des polyoxométallates de formule générale (HₕXₓMₘO_{y})^{q-} dans laquelle x = 0, les autres éléments ayant la signification précitée.

De préférence, les m atomes M desdits isopolyanions sont soit uniquement des atomes de molybdène, soit uniquement des atomes de tungstène, soit un mélange d'atomes de molybdène et de tungstène
De préférence, dans le cas où l'élément M est le Molybdène (Mo), m est égal à 7 ou à 12. De même, de préférence, dans le cas où l'élément M est le tungstène (W), m est égal à 12.

Les isopolyanons Mo₇O₂₄⁶⁻ et H₂W₁₂O₄₀⁶⁻ sont avantageusement utilisés comme précurseurs de phase active dans le cadre de l'invention.

Les hétéropolyanions qui peuvent être utilisés dans la présente invention sont des polyoxométallates de formule (HₕXₓMₘO_{y})^{q-} dans laquelle x = 1, 2, 3 ou 4, les autres éléments ayant la signification précitée.

Les hétéropolyanions présentent généralement une structure dans laquelle l'élément X est l'atome "central" et l'élément M est un atome métallique pratiquement systématiquement en coordination octaédrique avec X différent de M.

De préférence, les m atomes M sont soit uniquement des atomes de molybdène, soit uniquement des atomes de tungstène, soit un mélange d'atomes de tungstène et de molybdène.

De préférence, l'élément X est au moins un atome de phosphore.

Les hétéropolyanions sont des espèces polyoxométallates chargées négativement. Pour compenser ces charges négatives, il est nécessaire d'introduire des contre-ions et plus particulièrement des cations. Ces cations peuvent avantageusement être des protons H⁺, ou tout autre cation de type NH₄⁺ ou des cations métalliques.

Dans le cas où les contre-ions sont des protons, la structure moléculaire comprenant l'hétéropolyanion et au moins un proton constitue un hétéropolyacide. Les hétéropolyacides qui peuvent être utilisés comme précurseurs de phase active dans la présente invention peuvent être à titre d'exemple l'acide phosphomolybdique (3H⁺, PMo₁₂O₄₀³⁻) ou encore l'acide phosphotungstique (3H⁺, PW₁₂O₄₀³⁻).

Dans le cas où les contre-ions ne sont pas des protons, on parle alors de sel d'hétéropolyanion pour désigner cette structure moléculaire. On peut alors avantageusement tirer profit de l'association au sein de la même structure moléculaire, via l'emploi d'un sel d'hétéropolyanion, du métal M et de son promoteur, c'est à dire de l'élément titane et/ou de l'élément zirconium et/ou de l'élément hafnium qui peut soit être en position X au sein de la structure de l'hétéropolyanion, soit en substitution partielle d'au moins un atome M de molybdène et/ou de tungstène au sein de la structure de l'hétéropolyanion, soit en position de contre-ion.

De préférence, les polyoxométallates utilisés selon l'invention, sont les composés répondant à la formule (HₕXₓMₘO_{y})^{q-} dans laquelle H est l'hydrogène, X est un élément choisi parmi le phosphore (P), le silicium (Si), le bore (B), ledit élément étant pris seul, M est un ou plusieurs élément(s) choisi(s) parmi le molybdène (Mo) et/ou le tungstène (W), O étant l'oxygène, h étant un entier compris entre 0 et 6, x étant un entier pouvant être égal à 0, 1 ou 2, m étant un entier égal à 5, 6, 7, 9, 10, 11 et 12, y étant un entier compris entre 17 et 48 et q étant un entier compris entre 3 et 12.

De manière plus préférée, les polyoxométallates utilisés selon l'invention, sont les composés répondant à la formule (HₕXₓMₘO_{y})^{q-} dans laquelle h étant un entier égal à 0, 1, 4 ou 6, x étant un entier égal à 0, 1 ou 2, m étant un entier égal à 5, 6, 10 ou 12, y étant un entier égal à 23, 24, 38, ou 40 et q étant un entier égal à 3, 4, 6 et 7, H, X, M et O ayant la signification précitée. Les polyoxométallates préférés utilisés selon l'invention sont avantageusement choisis parmi les polyoxométallates de formule PMo₁₂O₄₀³⁻, PW₁₂O₄₀³⁻, SiMo₁₂O₄₀⁴⁻, SiW₁₂O₄₀³⁻ P₂Mo₅O₂₃⁶⁻, pris seuls ou en mélange.

D'autres polyoxométallates préférés qui peuvent avantageusement être utilisés dans le procédé selon l'invention sont les hétéropolyanions dits de Keggin de formule générale XM₁₂O₄₀^{q-} pour lesquels le rapport m/x est égal à 12 et les hétéropolyanions dits de Keggin lacunaire de formule générale XM₁₁O₃₉^{q-} pour lesquels le rapport m/x est égal à 11 et dans laquelle les éléments X et M et la charge q ont la signification précitée. X est donc un élément choisi parmi le phosphore (P), le silicium (Si), le bore (B), ledit élément étant pris seul, M est un ou plusieurs élément(s) choisi(s) parmi le molybdène (Mo) et/ou le tungstène (W), et q étant un entier compris entre 1 et 20 et de préférence entre 3 et 12.

Lesdites espèces de Keggin sont avantageusement obtenues pour des gammes de pH variables selon les voies d'obtention décrites dans la publication de A. Griboval, P. Blanchard, E. Payen, M. Fournier, J. L. Dubois, Chemistry Letters, 1997, Vol.26, No.12, 1259-1260. Des sels d'hétéropolyanions de type Keggin ou Keggin lacunaire peuvent également être avantageusement utilisés selon l'invention.

Un autre polyoxométallate préféré qui peut avantageusement être utilisé comme précurseur mis en œuvre dans le procédé selon l'invention est l'hétéropolyanion de Strandberg de formule HₕP₂Mo₅O₂₃^{(6-h)-} , h étant égal à 0, 1 ou 2 et pour lesquels le rapport m/x est égal à 5/2.

La préparation des dits hétéropolyanions de Strandberg et en particulier dudit hétéropolyanion de formule HₕP₂Mo₅O₂₃^{(6-h)-} est décrite dans l'article de W-C. Cheng, N. P. Luthra, J. Catal., 1988, 109, 163.

Ledit précurseur comprenant au moins un métal du groupe VIB est au moins partiellement soluble en phase aqueuse ou en phase organique. Les solvants utilisés sont généralement l'eau, un alcool (de manière préférée l'éthanol), un éther, une cétone, un composé chloré ou un composé aromatique. L'eau, l'eau acidifiée, le toluène, le benzène, le dichlorométhane, le tétrahydrofurane, le cyclohexane, le n-hexane, l'éthanol, le méthanol et l'acétone sont utilisés de manière préférée. Lorsque le métal du groupe VIB est introduit sous la forme d'alcoxyde ou sous forme d'un précurseur organique, le solvant est de préférence choisi parmi le toluène, le benzène, le dichlorométhane, le tétrahydrofurane, le cyclohexane, et le n-hexane.

Ainsi, grâce à des méthodes de préparation diverses, de nombreux polyoxométallates et leurs sels associés sont disponibles. De manière générale, tous ces polyoxométallates et leurs sels associés peuvent être avantageusement utilisés lors de l'électrolyse mise en œuvre dans le procédé selon l'invention. La liste précédente n'est cependant pas exhaustive et d'autres combinaisons peuvent être envisagées.

### Étape b)

Conformément à l'étape b) du procédé de préparation selon l'invention, on réalise au moins une étape de mise en contact du support par au moins une solution contenant au moins un précurseur de la phase active comprenant au moins un métal du groupe IVB. Avantageusement, l'étape de mise en contact du support avec au moins un précurseur de la phase active comprenant au moins un métal du groupe IVB avec le support, conformément à la mise en œuvre de l'étape b), peut être réalisé par imprégnation, à sec ou en excès, ou encore par dépôt - précipitation, selon des méthodes bien connues de l'Homme du métier. De manière préférée, ladite étape b) est réalisée par imprégnation à sec, laquelle consiste à mettre en contact le support avec une solution, contenant au moins un précurseur comprenant un groupe IVB, dont le volume de la solution est compris entre 0,25 et 1,5 fois le volume poreux du support à imprégner.

### Précurseurs comprenant au moins un métal du groupe IVB

Les précurseurs comprenant au moins un métal du groupe IVB peuvent être choisis parmi tous les précurseurs des éléments du groupe IVB connus de l'Homme de l'Art.

Les éléments du groupe IVB préférés sont des éléments non nobles : ils sont choisis parmi le titane (Ti), le zirconium Zr et l'hafnium (Hf). Le métal du groupe IVB peut être introduit sous la forme de sels, de composés chélatants, d'alcoxydes ou de glycoxydes. Les sources d'éléments du groupe IVB qui peuvent avantageusement être utilisées sous forme de sels, sont bien connues de l'Homme du métier. Ils sont choisis parmi les nitrates, les sulfates, les hydroxydes, les phosphates, les carbonates, les halogénures choisis parmi les chlorures, les bromures et les fluorures.

Les éléments du groupe IVB peuvent également être introduits sous la forme d'oxydes, dans ce cas, le précurseur sera dissous à l'aide d'une solution acide (acide nitrique, acide phosphorique, acide chlorhydrique, acide fluorhydrique, acide sulfurique, H₂O₂, ...) avant d'imprégner le support.

Ledit précurseur comprenant au moins un métal du groupe IVB est partiellement soluble en phase aqueuse ou en phase organique. Les solvants utilisés sont généralement l'eau, un alcane, un alcool, un éther, une cétone, un composé chloré ou un composé aromatique. L'eau acidifiée, le toluène, le benzène, le dichlorométhane, le tétrahydrofurane, le cyclohexane, le n-hexane, l'éthanol, le méthanol et l'acétone sont utilisés de manière préférée. Le métal du groupe IVB est introduit de manière préférée, sous la forme d'alcoxyde lorsqu'un solvant organique est utilisé.

De manière préférée, dans une solution aqueuse, le précurseur de Zr est l'hydroxyde de zirconium (Zr(OH)₄), le précurseur de Hf est l'hydroxyde, l'oxalate, le nitrate ou le sulfate de hafnium.

Dans un mode de réalisation, les précurseurs de zirconium, d'hafnium et de titane sont choisis parmi les alcoxydes de zirconium, d'hafnium et de titane.

### Mise en œuvre des étapes a) et b)

Selon un mode de réalisation selon l'invention, ledit précurseur comprenant au moins un métal du groupe IVB est introduit soit :
i) avant l'étape de mise en contact a), dans une étape dite de pré-imprégnation à l'aide d'une solution comprenant au moins un précurseur comportant au moins un métal du groupe IVB ;
ii) lors de l'étape de mise en contact a), en co-imprégnation avec ladite solution comprenant au moins un précurseur comprenant au moins un métal du groupe VIB ;
iii) après l'étape de mise en contact a), dans une étape dite de post-imprégnation, à l'aide d'une solution contenant au moins un précurseur comprenant au moins un métal du groupe IVB.

Chaque étape a) et b) de mise en contact du support avec au moins une solution contenant au moins un précurseur de la phase active comprenant au moins un métal du groupe VIB (étape a), et de mise en contact du support par au moins une solution contenant au moins un précurseur de la phase active comprenant au moins un métal du groupe IVB (étape b) est réalisée au moins une fois et peut avantageusement être réalisée plusieurs fois, toutes les combinaisons possibles de mises en œuvre des étapes a) et b) sont incluses dans la portée de l'invention.

Chaque étape de mise en contact peut être de préférence suivie d'une étape de séchage intermédiaire. L'étape de séchage intermédiaire est effectuée à une température inférieure à 250°C, de préférence comprise entre 15°C et 240°C, plus préférentiellement entre 30°C et 220°C, encore plus préférentiellement entre 50°C et 200°C, et de manière encore plus préférentielle entre 70°C et 180°C.

Avantageusement, après chaque étape de mise en contact, on peut laisser maturer le support imprégné, éventuellement avant une étape de séchage intermédiaire. La maturation permet à la solution de se répartir de manière homogène au sein du support. Lorsqu'une étape de maturation est réalisée, ladite étape est opérée avantageusement à pression atmosphérique, sous une atmosphère inerte ou sous une atmosphère contenant de l'oxygène ou sous une atmosphère contenant de l'eau ou le solvant d'imprégnation, et à une température comprise entre 10°C et 50°C, et de préférence à température ambiante. Généralement une durée de maturation inférieure à 48 heures et de préférence comprise entre 5 minutes et 12 heures est suffisante.

Avantageusement, lorsque les étapes a) et b) ne sont pas réalisées simultanément, chaque étape de mise en contact peut être de préférence suivie d'une étape de séchage intermédiaire, telle que décrite ci-avant, puis d'une étape de sulfuration intermédiaire.

L'étape de sulfuration intermédiaire peut être réalisée avantageusement à l'aide d'un mélange gazeux H₂S/H₂ ou H₂S/N₂ contenant au moins 5% volumique d'H₂S dans le mélange ou sous flux d'H₂S pur à une température comprise entre 100°C et 600°C, sous une pression totale égale ou supérieure à 0,1 MPa pendant au moins 2 heures. De manière préférée, la température de sulfuration est comprise entre 350°C et 550°C.

### Autres promoteurs

Les solutions utilisées dans les différentes étapes d'imprégnation ou d'imprégnation successives peuvent éventuellement contenir au moins un précurseur d'un élément dopant choisi parmi le bore, le phosphore et le silicium. Les précurseurs d'un élément dopant choisi parmi le bore, le phosphore et le silicium peuvent également avantageusement être ajoutés dans des solutions d'imprégnation ne contenant pas les précurseurs d'au moins un métal choisi dans le groupe formé par les métaux du groupes IVB et les métaux du groupe VIB, pris seul ou en mélange. De manière préférée, l'élément dopant est le phosphore.

Les solutions utilisées dans les différentes étapes d'imprégnation ou d'imprégnation successives peuvent éventuellement contenir au moins un composé organique. Ledit composé organique peut être choisi parmi tous les composés organiques connus de l'Homme de l'Art, et est sélectionné en particulier parmi les agents chélatants, les agents non chélatants, les agents réducteurs, les agents non réducteurs. Il peut aussi être choisi parmi les mono-, di- ou polyalcools éventuellement éthérifiés, les acides carboxyliques, les sucres, les mono, di- ou polysaccharides non cycliques tels que le glucose, le fructose, le maltose, le lactose ou le sucrose, les esters, les éthers, les éthers-couronnes, les cyclodextrines et les composés contenant du soufre ou de l'azote comme l'acide nitriloacétique, l'acide ethylènediaminetetraacétique, ou la diéthylenetriamine seuls ou en mélange.

Lesdits précurseurs des métaux du groupes IVB et des métaux du groupe VIB, les précurseurs des éléments dopants et les composés organiques sont avantageusement introduits dans la ou les solutions d'imprégnation dans une quantité telle que les teneurs en élément du groupe IVB, VIB, en élément dopant et en additifs organiques sur le catalyseur final soient telles que définies plus bas.

### Etape c) de séchage

L'étape de séchage est effectuée à une température inférieure à 250°C, de préférence comprise entre 15°C et 240°C, plus préférentiellement entre 30°C et 220°C, encore plus préférentiellement entre 50°C et 200°C, et de manière encore plus préférentielle entre 70°C et 180°C. De manière très préférée, le séchage s'effectue à pression réduite à une température n'excédant pas 80°C. Le temps de séchage est compris entre 30 minutes et 24 heures, de préférence entre 30 minutes et 16 heures. De préférence, le temps de séchage n'excède pas 4 heures.

L'étape de séchage peut être effectuée par toute technique connue de l'Homme du métier. Elle est avantageusement effectuée sous une atmosphère inerte ou sous une atmosphère contenant de l'oxygène. Elle est avantageusement effectuée à pression atmosphérique ou à pression réduite.

### Etape d) de sulfuration

La sulfuration réalisée au cours de l'étape d) est destinée à sulfurer au moins partiellement le métal du groupe VIB, et éventuellement au moins partiellement le métal du groupe IVB.

L'étape d) de sulfuration peut être réalisée avantageusement à l'aide d'un mélange gazeux H₂S/H₂ ou H₂S/N₂ contenant au moins 5% volumique d'H₂S dans le mélange ou sous flux d'H₂S pur à une température comprise entre 100°C et 600°C, sous une pression totale égale ou supérieure à 0,1 MPa pendant au moins 2 heures.

De manière préférée, la température de sulfuration est comprise entre 250°C et 450°C.

### Matériau Catalytique

L'activité du matériau catalytique pour la production d'hydrogène par électrolyse de l'eau est assurée par une phase active comprenant, de préférence constitué de, au moins un élément du groupe VIB au moins en partie sous forme sulfurée et au moins un élément du groupe IVB au moins en partie sous forme sulfurée. Avantageusement, la phase active est choisie dans le groupe formé par les combinaisons des éléments titane-molybdène ou zirconium-molybdène ou hafnium-molybdène ou titane-zirconium-molybdène ou titane-hafnium-molybdène ou zirconium-hafnium-molybdène ou titane-tungstène ou zirconium-tungstène ou hafnium-tungstène ou titane-zirconium-tungstène ou titane-hafnium-tungstène ou zirconium-hafnium-tungstène ou titane-molybdène-tungstène ou zirconium-molybdène-tungstène ou hafnium-molybdène-tungstène.

Lorsque le métal du groupe VIB est le molybdène, la teneur en molybdène (Mo) est comprise entre 4 et 60% poids en élément Mo par rapport au poids du matériau catalytique final, et de manière préférée entre 7 et 50% poids par rapport au poids du matériau catalytique final obtenu après la dernière étape de préparation, i.e. la sulfuration.

Lorsque le métal du groupe VIB est le tungstène, la teneur en tungstène (W) est comprise entre 7 et 70% poids en élément W par rapport au poids du matériau catalytique final, et de manière préférée entre 12 et 60% poids par rapport au poids du matériau catalytique final obtenu après la dernière étape de préparation, i.e. la sulfuration.

La densité surfacique qui correspond à la quantité d'atomes de molybdène Mo et/ou de tungstène W déposés par unité surfacique de support sera avantageusement comprise entre 0,5 et 20 atomes de Mo et/ou de W par nanomètre carré de support et de manière préférée entre 2 et 15 atomes de Mo et/ou de W par nanomètre carré de support.

La teneur en métal du groupe IVB est avantageusement comprises entre 0,1 et 25% poids, de préférence entre 0,5 et 20% poids en élément du groupe IVB par rapport au poids total du matériau catalytique final obtenu après la dernière étape de préparation, i.e. la sulfuration.

### Support du matériau catalytique

Le support du matériau catalytique est un support comprenant, de préférence constitué de, au moins un matériau électro-conducteur.

Dans un mode de réalisation selon l'invention, le support du matériau catalytique comprend au moins un matériau choisi parmi les structures carbonées, de préférence le noir de carbone, le graphite, les nanotubes de carbone ou le graphène.

Dans un mode de réalisation selon l'invention, le support du matériau catalytique comprend au moins un matériau choisi parmi le nickel, l'or, le cuivre, l'argent, le titane, le silicium.

Dans un mode de réalisation selon l'invention, le support du matériau catalytique comprend un matériau choisi parmi, le dioxyde d'étain dopé au fluor (FTO ou Fluorine-doped Tin Oxide selon la terminologie anglo-saxonne), l'oxyde d'indium et d'étain (ITO ou Indium Tin Oxide selon la terminologie anglo-saxonne) et tout autre support transparent conducteur.

Un matériau poreux et non électro-conducteur peut être rendu électro-conducteur en déposant à la surface de celui-ci un matériau électro-conducteur ; citons par exemple un oxyde réfractaire, tel qu'une alumine, au sein de laquelle on dépose du carbone graphitique.

Le support du matériau catalytique présente avantageusement une surface spécifique BET (S_{BET}) supérieure à 75 m²/g, de préférence supérieure à 100 m²/g, de manière très préférée supérieure à 130 m²/g.

### Electrode

Le matériau catalytique susceptible d'être obtenu par le procédé de préparation selon l'invention peut être utilisé en tant que matériau catalytique d'électrode apte à être utilisé pour des réactions électrochimiques, et en particulier pour l'électrolyse de l'eau en milieu électrolytique liquide.

Avantageusement, l'électrode comprend un matériau catalytique obtenu par le procédé de préparation selon l'invention et un liant.

Le liant est de préférence un liant polymère choisi pour ses capacités à être déposé sous forme d'une couche d'épaisseur variable et pour ses capacités de conduction ionique en milieu aqueux et de diffusion des gaz dissous. La couche d'épaisseur variable, avantageusement comprise entre 1 et 500 µm, en particulier de l'ordre de 10 à 100 µm, peut être notamment un gel ou un film.

Avantageusement, le liant polymère conducteur ionique est:
* soit conducteur de groupes anioniques, notamment de groupe hydroxy et est choisi dans le groupe comprenant notamment :
   - des polymères stables en milieu aqueux, pouvant être perfluorés, partiellement fluorés ou non fluorés et présentant des groupes cationiques permettant la conduction des anions hydroxydes, lesdits groupes cationiques étant de type ammonium quaternaire, guanidinium, imidazolium, phosphonium, pyridium ou sulfide ;
   - le polybenzimidazole non greffé ;
   - le chitosane ; et
   - les mélanges de polymères comprenant au moins un des différents polymères cités précédemment, ledit mélange possédant des propriétés de conducteur anionique ;
* soit conducteur de groupes cationiques permettant la conduction des protons et est choisi dans le groupe comprenant notamment :
   - des polymères stables en milieu aqueux, pouvant être perfluorés, partiellement fluorés ou non fluorés et présentant des groupes anioniques permettant la conduction des protons ;
   - le polybenzimidazole greffé ;
   - le chitosane ; et
   - les mélanges de polymères comprenant au moins un des différents polymères cités précédemment, ledit mélange possédant des propriétés de conducteur cationique.

Parmi les polymères stables en milieu aqueux et présentant des groupes cationiques permettant la conduction d'anions, on peut notamment citer des chaînes polymériques de type perfluoré comme par exemple le polytétrafluoroéthylène (PTFE), de type partiellement fluoré, comme par exemple le polyfluorure de vinylidène (PVDF) ou de type non fluoré comme le polyéthylène, qui seront greffées avec des groupements moléculaires conducteurs anioniques.

Parmi les polymères stables en milieu aqueux et présentant des groupes anioniques permettant la conduction des protons, on peut considérer toute chaîne polymérique stable en milieu aqueux contenant des groupements tels que -SO₃⁻ , -COO⁻, -PO₃²⁻, -PO₃H⁻, -C₆H₄O⁻. On peut notamment citer le Nafion^{®}, le polybenzimidazole (PBI) sulfoné phosphoné, le polyétheréthercétone (PEEK) sulfoné ou phosphoné.

Conformément à la présente invention, on pourra utiliser tout mélange comprenant au moins deux polymères dont un au moins est choisi dans les groupes de polymères cités précédemment, pourvu que le mélange final soit conducteur ionique en milieu aqueux. Ainsi on peut citer à titre d'exemple un mélange comprenant un polymère stable en milieu alcalin et présentant des groupes cationiques permettant la conduction des anions hydroxydes avec un polyéthylène non greffé par des groupements moléculaires conducteurs anioniques pourvu que ce mélange final soit conducteur anionique en milieu alcalin. On peut également citer à titre d'exemple un mélange d'un polymère stable en milieu acide ou alcalin et présentant des groupes anioniques ou cationiques permettant la conduction des protons ou des hydroxydes et de polybenzimidazole greffé ou non.

Avantageusement, le polybenzimidazole (PBI) est utilisé dans la présente invention comme liant. Ce n'est intrinsèquement pas un bon conducteur ionique, mais en milieu alcalin ou acide, il se révèle être un excellent polyélectrolyte avec respectivement de très bonnes propriétés de conduction anionique ou cationique. Le PBI est un polymère généralement utilisé, sous forme greffée, dans la fabrication de membranes conductrices protoniques pour les piles à combustible, dans les assemblages membrane-électrode et dans les électrolyseurs type PEM, comme une alternative au Nafion^{®}. Dans ces applications, le PBI est généralement fonctionnalisé/greffé, par exemple par une sulfonation, afin de le rendre conducteur protonique. Le rôle du PBI dans ce type de système est alors différent de celui qu'il a dans la fabrication des électrodes selon la présente invention où il ne sert que de liant et n'a aucun rôle direct dans la réaction électrochimique.

Même si sa stabilité à long terme en milieu acide concentré est limitée, le chitosane, également utilisable comme polymère conducteur anionique ou cationique, est un polysaccharide présentant des propriétés de conduction ionique en milieu basique qui sont similaires à celles du PBI (G. Couture, A. Alaaeddine, F. Boschet, B. Ameduri, Progress in Polymer Science 36 (2011) 1521-1557).

Avantageusement, l'électrode selon l'invention est formulée par un procédé qui comprend en outre une étape d'élimination du solvant en même temps ou après l'étape 3). L'élimination du solvant peut être réalisée par toute technique connue de l'homme du métier notamment par évaporation ou inversion de phase.

En cas d'évaporation, le solvant est un solvant organique ou inorganique dont la température d'évaporation est inférieure à la température de décomposition du liant polymère utilisé. On peut citer à titre d'exemples le diméthylsulfoxyde (DMSO) ou l'acide acétique ou le propanol. L'homme du métier est capable de choisir le solvant organique ou inorganique adapté au polymère ou au mélange de polymère utilisé comme liant et susceptible d'être évaporé. Selon un mode de réalisation préféré de l'invention, l'électrode est apte à être utilisée pour l'électrolyse de l'eau en milieu électrolyte liquide alcalin et le liant polymère est alors un conducteur anionique en milieu électrolyte liquide alcalin, notamment conducteur d'hydroxydes.

Au sens de la présente invention, on entend par milieu électrolyte liquide alcalin, un milieu dont le pH est supérieur à 7, avantageusement supérieur à 10.

Le liant est avantageusement conducteur d'hydroxydes en milieu alcalin. Il est stable chimiquement dans les bains d'électrolyse et a la capacité de diffuser et/ou de transporter les ions OH⁻ impliqués dans la réaction électrochimique jusqu'à la surface des particules, sièges des réactions redox de production des gaz H₂ et O₂. Ainsi, une surface qui ne serait pas en contact direct avec l'électrolyte est quand même impliquée dans la réaction d'électrolyse, point clé de l'efficacité du système. Le liant choisi et la mise en forme de l'électrode n'entravent pas la diffusion des gaz formés et limitent leur adsorption permettant ainsi leur évacuation. Selon un autre mode de réalisation préféré de l'invention, l'électrode est apte à être utilisée pour l'électrolyse de l'eau en milieu électrolyte liquide acide et le liant polymère est un conducteur cationique en milieu électrolyte liquide acide, notamment conducteur de protons.

Au sens de la présente invention, on entend par milieu acide, un milieu dont le pH est inférieur à 7, avantageusement inférieur à 2.

L'homme du métier, à la lumière de ses connaissances générales, sera capable de définir les quantités de chaque composant de l'électrode. La densité de particules de matériau catalytique doit être suffisante pour atteindre leur seuil de percolation électrique.

Selon un mode de réalisation préféré de l'invention, le rapport massique liant polymère/matériau catalytique est compris entre 5/95 et 95/5, de préférence entre 10/90 et 90/10, et plus préférentiellement compris entre 60/40 et 40/60.

### Procédé de préparation de l'électrode

L'électrode peut être préparée selon des techniques bien connues de l'Homme du métier. Plus particulièrement, l'électrode est préparée par un procédé comprenant les étapes suivantes :
1) on dissout dans un solvant ou un mélange de solvant, au moins un liant polymère conducteur ionique ;
2) on ajoute à la solution obtenue à l'étape 1) au moins un matériau catalytique préparé selon l'invention, sous forme de poudre, pour obtenir un mélange ;
les étapes 1) et 2) étant réalisées dans un ordre indifférent, ou simultanément ;
3) on dépose sur un support ou collecteur conducteur métallique, ou de type métallique, le mélange obtenu à l'étape 2).

Au sens de l'invention, on entend par poudre de matériau catalytique, une poudre constituée de particules de taille micronique, sub-micronique ou nanométrique. Les poudres peuvent être préparées par des techniques connues de l'homme du métier.

Au sens de l'invention, on entend par support ou collecteur de type métallique tout matériau conducteur ayant les mêmes propriétés de conduction que les métaux, par exemple le graphite ou certains polymères conducteurs tels que la polyaniline et le polythiophène. Le dépôt du mélange obtenu (entre le liant et le matériau catalytique) sur le support peut être réalisé par n'importe quelle méthode choisie dans le groupe comprenant notamment le trempage, l'impression, l'induction, le pressage, l'enduction, le dépôt à la tournette (ou *« spin-coating »* selon la terminologie anglo-saxonne), la filtration, le dépôt sous vide, le dépôt par pulvérisation, le coulage, l'extrusion ou le laminage. Ledit support ou ledit collecteur peut être plein ou ajouré. A titre d'exemple de support, on peut citer une grille (support ajouré), une plaque ou une feuille d'acier inoxydable (304L ou 316L par exemple) (supports pleins).

L'avantage du mélange selon l'invention est qu'il peut être déposé sur un collecteur plein ou ajouré, par des techniques usuelles de dépôt facilement accessibles et permettant un dépôt sous formes de couches d'épaisseurs variables idéalement de l'ordre de 10 à 100 µm. Conformément à l'invention, le mélange peut être préparé par toute technique connue de l'homme du métier, notamment par mélange du liant et d'au moins un matériau catalytique sous forme de poudre dans un solvant approprié ou un mélange de solvants appropriés pour l'obtention d'un mélange aux propriétés rhéologiques permettant le dépôt des matériaux d'électrode sous forme d'un film d'épaisseur contrôlée sur un substrat conducteur électronique. L'utilisation du matériau catalytique sous forme de poudre permet une maximisation de la surface développée par les électrodes et une exaltation des performances associées.

L'homme du métier saura faire les choix des différents paramètres de formulation à la lumière de ses connaissances générales et des caractéristiques physico-chimiques des dits mélanges.

### Procédés d'utilisation

Un autre objet selon l'invention concerne un dispositif d'électrolyse comprenant une anode, une cathode, un électrolyte, dans lequel au moins l'une de l'anode ou de la cathode est une électrode selon l'invention.

Le dispositif d'électrolyse peut être utilisé en tant que dispositif d'électrolyse de l'eau pour la production d'un mélange gazeux d'hydrogène et d'oxygène et/ou la production d'hydrogène seul comprenant une anode, une cathode et un électrolyte, ledit dispositif étant caractérisé en ce que l'une au moins de la cathode ou de l'anode est une électrode selon l'invention, de préférence la cathode. Le dispositif d'électrolyse est constitué de deux électrodes (une anode et une cathode, conducteurs électroniques) reliées à un générateur de courant continu, et séparées par un électrolyte (milieu conducteur ionique). L'anode est le siège de l'oxydation de l'eau. La cathode est le siège de la réduction des protons et la formation d'hydrogène.

L'électrolyte peut être :
- soit une solution aqueuse acide (H₂SO₄ ou HCl,...) ou basique (KOH) ;
- soit une membrane polymère échangeuse de protons qui assure le transfert des protons de l'anode à la cathode et permet la séparation des compartiments anodique et cathodique, ce qui évite de réoxyder à l'anode les espèces réduites à la cathode et réciproquement ;
- soit une membrane céramique conductrice d'ions O₂⁻. On parle alors d'une électrolyse à oxyde solide (SOEC ou *'Solid Oxide Electrolyser Cell'* selon la terminologie anglo-saxonne). L'alimentation minimale en eau d'un dispositif d'électrolyse est de 0,8 I/Nm³ d'hydrogène. En pratique, la valeur réelle est proche de 1 I/Nm³. L'eau introduite doit être la plus pure possible car les impuretés demeurent dans l'équipement et s'accumulent au fil de l'électrolyse, perturbant in fine les réactions électrolytiques par :
- la formation de boues ; et par
- l'action des chlorures sur les électrodes.

Une spécification importante sur l'eau porte sur sa conductivité ionique (qui doit être inférieure à quelques µS/cm).

Il existe de nombreux fournisseurs proposant des technologies très diversifiées, notamment en termes de nature de l'électrolyte et de technologie associée, allant d'un possible couplage amont avec une alimentation électrique renouvelable (photovoltaïque ou éolien), à la fourniture finale directe d'hydrogène sous pression.

La réaction a un potentiel standard de -1,23 V, ce qui signifie qu'elle nécessite idéalement une différence de potentiel entre l'anode et la cathode de 1,23 V. Une cellule standard fonctionne généralement sous une différence de potentiel de 1,5 V et à température ambiante. Certains systèmes peuvent fonctionner à plus haute température. En effet, il a été montré que l'électrolyse sous haute température (HTE) est plus efficace que l'électrolyse de l'eau à température ambiante, d'une part, parce qu'une partie de l'énergie nécessaire à la réaction peut être apportée par la chaleur (moins chère que l'électricité) et, d'autre part, parce que l'activation de la réaction est plus efficace à haute température. Les systèmes HTE fonctionnent généralement entre 100 °C et 850 °C.

Le dispositif d'électrolyse peut être utilisé en tant que dispositif d'électrolyse de l'azote pour la production d'ammoniac, comprenant une anode, une cathode et un électrolyte, ledit dispositif étant caractérisé en ce que l'une au moins de la cathode ou de l'anode est une électrode selon l'invention, de préférence la cathode.

Le dispositif d'électrolyse est constitué de deux électrodes (une anode et une cathode, conducteurs électroniques) reliées à un générateur de courant continu, et séparées par un électrolyte (milieu conducteur ionique). L'anode est le siège de l'oxydation de l'eau. La cathode est le siège de la réduction de l'azote et la formation d'ammoniac. L'azote est injecté en continu dans le compartiment cathodique.

La réaction de réduction de l'azote est:

N₂ + 6H⁺ + 6e⁻ → 2NH₃

L'électrolyte peut être :
- soit une solution aqueuse (Na₂SO₄ ou HCL), de préférence saturée en azote ;
- soit une membrane polymère échangeuse de protons qui assure le transfert des protons de l'anode à la cathode et permet la séparation des compartiments anodique et cathodique, ce qui évite de réoxyder à l'anode les espèces réduites à la cathode et réciproquement.

Le dispositif d'électrolyse peut être utilisé en tant que dispositif d'électrolyse du dioxyde de carbone pour la production d'acide formique, comprenant une anode, une cathode et un électrolyte, ledit dispositif étant caractérisé en ce que l'une au moins de la cathode ou de l'anode est une électrode selon l'invention. Un exemple d'anode et d'électrolyte pouvant être utilisé, dans un tel dispositif est décrit en détail dans le document FR3007427.

Le dispositif d'électrolyse peut être utilisé en tant que dispositif de pile à combustible pour la production d'électricité à partir d'hydrogène et d'oxygène comprenant une anode, une cathode et un électrolyte (liquide ou solide), ledit dispositif étant caractérisé en ce que l'une au moins de la cathode ou de l'anode est une électrode selon l'invention.

Le dispositif de pile à combustible est constitué de deux électrodes (une anode et une cathode, conducteurs électroniques) reliées à une charge C pour délivrer le courant électrique produit, et séparées par un électrolyte (milieu conducteur ionique). L'anode est le siège de l'oxydation de l'hydrogène. La cathode est le siège de la réduction de l'oxygène.

L'électrolyte peut être :
- soit une solution aqueuse acide (H₂SO₄ ou HCl,...) ou basique (KOH) ;
- soit une membrane polymère échangeuse de protons qui assure le transfert des protons de l'anode à la cathode et permet la séparation des compartiments anodique et cathodique, ce qui évite de réoxyder à l'anode les espèces réduites à la cathode et réciproquement ;
- soit une membrane céramique conductrice d'ions O₂⁻. On parle alors d'une pile à combustible à oxyde solide (SOFC ou *'Solid Oxide Fuel Cell'* selon la terminologie anglo-saxonne).

Les exemples suivants illustrent la présente invention sans toutefois en limiter la portée. Les exemples ci-dessous portent sur l'électrolyse de l'eau en milieu électrolytique liquide pour la production d'hydrogène.

### Exemples

### Exemple 1 : Préparation d'un matériau catalytique C1 (conforme à l'invention) à partir de H₃PMo₁₂O₄₀, de Zr(OH)₄ et de H₃PO₄.

Le matériau catalytique C1 (conforme) est préparé par imprégnation à sec de 10 g de support de type carbone commercial (ketjenblack^{®}, 1400 m²/g) avec 26 mL de solution. La solution est obtenue par solubilisation dans l'eau de H₃PMo₁₂O₄₀ à une concentration de 2,6 mol/l, de Zr(OH)₄ tel que le ratio Zr/Mo = 0,2 et de H₃PO₄ tel que le rapport P/Mo = 0,65. La préparation du catalyseur se poursuit par une étape de maturation où le solide imprégné est maintenu dans une enceinte close dont l'atmosphère est saturée en eau pendant 12 heures avant de subir une étape de séchage sous atmosphère inerte et à pression réduite (en tirant sous vide) à 60 °C (bain d'huile). Le précatalyseur est sulfuré sous H₂S pur à une température de 350°C pendant 2 heures sous 0,1 MPa de pression.

Sur le catalyseur final, la quantité de Mo correspond à une densité surfacique de 7 atomes par nm² et les ratios en Zr et P sont respectivement : Ni/Mo = 0,2 et P/Mo = 0,65.

### Exemple 2 : Préparation d'un matériau catalytique C2 (non-conforme à l'invention) à partir de H₃PMo₁₂O₄₀, de Ni(OH)₂ et d'acide citrique.

Le matériau catalytique C2 (non-conforme) est préparé par imprégnation à sec de 10 g de support de type carbone commercial (ketjenblack^{®}, 1400 m2/g) avec 26 mL de solution. La solution est obtenue par solubilisation dans l'eau de H₃PMo₁₂O₄₀ à une concentration de 2,6 mol/l, de Ni(OH)₂ tel que le ratio Ni/Mo = 0,2 et d'acide citrique tel que le rapport «acide citrique/Mo » = 0,5. La préparation du matériau se poursuit par une étape de maturation où le solide imprégné est maintenu dans une enceinte close dont l'atmosphère est saturée en eau pendant 12 heures avant de subir une étape de séchage sous atmosphère inerte et à pression réduite (en tirant sous vide) à 60°C (bain d'huile). Le précurseur de matériau catalytique est sulfuré sous H₂S pur à une température de 350°C pendant 2 heures sous 0,1 MPa de pression. Sur le catalyseur final, la quantité de Mo correspond à une densité surfacique de 7 atomes par nm² et les ratios en Ni et P sont respectivement : Ni/Mo = 0,2 et P/Mo = 0,08.

### Exemple 3 : Description du catalyseur commercial au Pt (Catalyseur C3)

Le matériau C3 provient de chez Alfa Aesar^{®} : il comprenant des particules de platine de S_{BET} = 27 m²/g.

### Exemple 4 : Test catalytique

La caractérisation de l'activité catalytique des matériaux catalytiques est opérée dans une cellule à 3 électrodes. Cette cellule est composée d'une électrode de travail, d'une contre électrode en platine et d'une électrode de référence Ag/AgCl. L'électrolyte est une solution aqueuse d'acide sulfurique (H₂SO₄) à 0,5 mol/L. Ce milieu est désoxygéné par barbotage à l'azote et les mesures sont faites sous atmosphère inerte (désaération à l'azote).

L'électrode de travail consiste en un disque de 5 mm de diamètre de carbone vitreux sertie dans un embout en Téflon (électrode à disque tournant). Le carbone vitreux a l'avantage de n'avoir aucune activité catalytique et d'être un très bon conducteur électrique. Afin de déposer les catalyseurs (C1, C2, C3) sur l'électrode, une encre catalytique est formulée. Cette encre est constituée d'un liant sous la forme d'une solution de 10 µL de Nafion^{®} 15% massique, d'un solvant (1 mL de 2-propanol) et de 5 mg de catalyseur (C1, C2, C3). Le liant a pour rôle d'assurer la cohésion des particules du catalyseur supporté et l'adhésion au carbone vitreux. Cette encre est ensuite placée dans un bain à ultrasons pendant 30 à 60 minutes afin d'homogénéiser le mélange. 12 µL de l'encre préparée est déposée sur l'électrode de travail (décrite ci-avant). L'encre est ensuite déposée sur l'électrode de travail puis séchée afin d'évaporer le solvant.

Différentes méthodes électrochimiques sont utilisées afin de déterminer les performances des catalyseurs :
- la voltammétrie linéaire : elle consiste à appliquer à l'électrode de travail un signal en potentiel qui varie avec le temps, soit de 0 à - 0,5 V vs RHE à une vitesse de 2 mV/s, et à mesurer le courant faradique de réponse, c'est-à-dire le courant dû à la réaction d'oxydo-réduction ayant lieu au niveau de l'électrode de travail. Cette méthode est idéale pour déterminer le pouvoir catalytique d'un matériau pour une réaction donnée. Elle permet, entre autres, de déterminer la surtension nécessaire pour la réduction des protons en H₂.
- la chronopotentiométrie : elle consiste, quant à elle, à appliquer un courant ou une densité de courant durant un temps déterminé et à mesurer le potentiel résultant. Cette étude permet de déterminer l'activité catalytique à courant constant mais également la stabilité du système dans le temps. Elle est réalisée avec une densité de courant de - 10 mA/cm² et durant un temps donné.

Les performances catalytiques sont rassemblées dans le tableau 1, ci-après. Elles sont exprimées en surtension à une densité de courant de -10 mA/cm².

**Tableau 1**

| Matériaux Catalytiques | Surtension à -10 mA/cm² [(mV) vs RHE] |
|---|---|
| C1 (conforme) | -160 |
| C2 (non conforme) | -190 |
| C3 (Platine, non conforme) | -90 |

Avec une surtension de seulement - 160 mV vs RHE, le matériau catalytique C1, à base de Zr et de P, présente des performances particulièrement améliorées comparativement à l'électrocatalyseur C2 optimisé à base de MoS₂ (formulation Ni,Mo,P) et relativement proches de celle du platine. Ce résultat démontre l'intérêt incontestable du matériau C1, conforme à l'invention pour le développement de la filière hydrogène par électrolyse de l'eau.

## Revendications

1. Matériau catalytique comprenant une phase active comprenant au moins un métal du groupe VIB au moins en partie sous forme sulfurée, au moins un métal du groupe IVB au moins en partie sous forme sulfurée, et un support électro-conducteur dans lequel ledit métal du groupe VIB est choisi parmi le molybdène et/ou le tungstène, ledit métal du groupe IVB est choisi parmi le titane, le zirconium et/ou l'hafnium.

2. Matériau catalytique selon la revendication 1, **caractérisé en ce que** lorsque le métal du groupe VIB est le molybdène, la teneur en molybdène est comprise entre 4 et 60% poids en élément molybdène par rapport au poids du matériau catalytique.

3. Matériau catalytique selon la revendication 1, **caractérisé en ce que** lorsque le métal du groupe VIB est le tungstène, la teneur en tungstène est comprise entre 7 et 70% poids en élément tungstène par rapport au poids du matériau catalytique.

4. Matériau catalytique selon l'une quelconque des revendications 1 à 3, **caractérisé en ce que** la teneur en métal du groupe IVB est comprise entre 0,1 et 25% poids en élément du groupe IVB par rapport au poids total du matériau catalytique.

5. Matériau catalytique selon l'une quelconque des revendications 1 à 4, **caractérisé en ce que** la phase active est choisie dans le groupe formé par les combinaisons des éléments titane-molybdène, zirconium-molybdène, hafnium-molybdène, titane-zirconium-molybdène, titane-hafnium-molybdène, zirconium-hafnium-molybdène, titane-tungstène, zirconium-tungstène, hafnium- tungstène, titane-zirconium-tungstène, titane-hafnium-tungstène, zirconium-hafnium-tungstène, titane-molybdène-tungstène, zirconium-molybdène-tungstène, et hafnium-molybdène-tungstène.

6. Matériau catalytique selon l'une quelconque des revendications 1 à 5, comprenant en outre un matériau dopant choisi parmi le bore, le phosphore et le silicium.

7. Matériau catalytique selon l'une quelconque des revendications 1 à 6, dans lequel le support électro-conducteur est choisi parmi :
- le noir de carbone, le graphite, les nanotubes de carbone, et le graphène ;
- le nickel, l'or, le cuivre, l'argent, le titane, et le silicium ;
- le dioxyde d'étain dopé au fluor, et l'oxyde d'indium et d'étain.

8. Matériau catalytique selon l'une quelconque des revendications 1 à 7, **caractérisé en ce que** le support du matériau catalytique présente une surface spécifique supérieure à 75 m²/g.

9. Procédé de préparation d'un matériau catalytique selon l'une quelconque des revendications 1 à 8, ledit procédé comprend au moins les étapes suivantes :
a) une étape de mise en contact dudit support par au moins une solution contenant au moins un précurseur d'au moins un métal du groupe VIB ;
b) une étape de mise en contact dudit support par au moins une solution contenant au moins un précurseur d'au moins un métal du groupe IVB ;
les étapes a) et b) étant réalisées dans un ordre indifférent ou simultanément ;
c) une étape de séchage à l'issue de l'enchainement des étapes a) et b) ou b) et a), à une température inférieure à 250°C, sans étape de calcination ultérieure ;
d) une étape de sulfuration du matériau obtenu à l'issue de l'étape c) à une température comprise entre 100°C et 600°C.

10. Procédé selon la revendication 9, dans lequel ledit précurseur d'au moins un métal du groupe VIB est choisi parmi :
les polyoxométallates répondant à la formule (HₕXₓMₘO_{y})^{q-} dans laquelle H est l'hydrogène,
X est un élément choisi parmi le phosphore (P), le silicium (Si), le bore (B), ledit élément étant pris seul, M est un ou plusieurs élément(s) choisi(s) parmi le molybdène (Mo), le tungstène (W), O étant l'oxygène, h étant un entier compris entre 0 et 12, x étant un entier compris entre 0 et 4, m étant un entier égal à 5, 6, 7, 8, 9, 10, 11, 12 ou 18, y étant un entier compris entre 17 et 72 et q étant un entier compris entre 1 et 20 ;
les sels de précurseurs des éléments du groupe VIB ; et
les précurseurs organiques ou inorganiques à base de Mo ou de W.

11. Procédé selon des revendications 9 ou 10, dans lequel ledit précurseur d'au moins un métal du groupe IVB est choisi parmi les alcoxydes de zirconium, d'hafnium et de titane, l'hydroxyde de zirconium, l'hydroxyde de hafnium, l'oxalate de hafnium, le nitrate de hafnium et le sulfate de hafnium.

12. Procédé selon l'une quelconque des revendications 9 à 11, dans lequel on réalise une étape de maturation après l'étape a) et/ou b), et avant l'étape c), à une température comprise entre 10 et 50°C pendant une durée inférieure à 48 heures.

13. Procédé de préparation d'une électrode comprenant au moins les étapes suivantes :
1) on dissout dans un solvant ou un mélange de solvant, au moins un liant polymère conducteur ionique ;
2) on ajoute à la solution obtenue à l'étape 1) au moins un matériau catalytique selon l'une quelconque des revendications 1 à 8 ou un matériau catalytique obtenu selon l'une quelconque des revendications 9 à 12, sous forme de poudre, pour obtenir un mélange ;
les étapes 1) et 2) étant réalisées dans un ordre indifférent, ou simultanément ;
3) on dépose sur un support ou collecteur conducteur métallique le mélange obtenu à l'étape 2).

14. Dispositif d'électrolyse comprenant une anode, une cathode, un électrolyte, ledit dispositif étant **caractérisé en ce que** l'une au moins de l'anode ou de la cathode est une électrode obtenue selon le procédé de préparation selon la revendication 13.

15. Utilisation du dispositif d'électrolyse selon la revendication 14 dans des réactions électrochimiques, dans lequel ledit dispositif est utilisé en tant que :
- dispositif d'électrolyse de l'eau pour la production d'un mélange gazeux d'hydrogène et d'oxygène et/ou la production d'hydrogène seul ;
- dispositif d'électrolyse du dioxyde de carbone pour la production d'acide formique ;
- dispositif d'électrolyse de l'azote pour la production d'ammoniac ;
- dispositif de pile à combustible pour la production d'électricité à partir d'hydrogène et d'oxygène.

## Patentansprüche

1. Katalytisches Material, das eine aktive Phase umfasst, die mindestens ein Metall der Gruppe VIB zumindest teilweise in sulfidierter Form, mindestens ein Metall der Gruppe IVB zumindest teilweise in sulfidierter Form und einen elektrisch leitfähigen Träger umfasst, wobei das Metall der Gruppe VIB aus Molybdän und/oder Wolfram ausgewählt ist, das Metall der Gruppe IVB aus Titan, Zirconium und/oder Hafnium ausgewählt ist.

2. Katalytisches Material nach Anspruch 1, **dadurch gekennzeichnet, dass**, wenn es sich bei dem Metall der Gruppe VIB um Molybdän handelt, der Molybdängehalt zwischen 4 und 60 Gew.-% des Elements Molybdän, bezogen auf das Gewicht des katalytischen Materials, beträgt.

3. Katalytisches Material nach Anspruch 1, **dadurch gekennzeichnet, dass**, wenn es sich bei dem Metall der Gruppe VIB um Wolfram handelt, der Wolframgehalt zwischen 7 und 70 Gew.-% des Elements Wolfram, bezogen auf das Gewicht des katalytischen Materials, beträgt.

4. Katalytisches Material nach einem der Ansprüche 1 bis 3, **dadurch gekennzeichnet, dass** der Gehalt des Metalls der Gruppe IVB zwischen 0,1 und 25 Gew.-% des Elements der Gruppe IVB, bezogen auf das Gesamtgewicht des katalytischen Materials, beträgt.

5. Katalytisches Material nach einem der Ansprüche 1 bis 4, **dadurch gekennzeichnet, dass** die aktive Phase ausgewählt ist aus der Gruppe bestehend aus den Kombinationen der Elemente Titan-Molybdän, Zirconium-Molybdän, Hafnium-Molybdän, Titan-Zirconium-Molybdän, Titan-Hafnium-Molybdän, Zirconium-Hafnium-Molybdän, Titan-Wolfram, Zirconium-Wolfram, Hafnium-Wolfram, Titan-Zirconium-Wolfram, Titan-Hafnium-Wolfram, Zirconium-Hafnium-Wolfram, Titan-Molybdän-Wolfram, Zirconium-Molybdän-Wolfram und Hafnium-Molybdän-Wolfram.

6. Katalytisches Material nach einem der Ansprüche 1 bis 5, **dadurch gekennzeichnet, dass** außerdem ein aus Bor, Phosphor und Silicium ausgewähltes Dotierungsmaterial umfasst.

7. Katalytisches Material nach einem der Ansprüche 1 bis 6, wobei der elektrisch leitfähige Träger ausgewählt ist aus:
- Ruß, Graphit, Kohlenstoff-Nanoröhrchen und Graphen;
- Nickel, Gold, Kupfer, Silber, Titan und Silicium;
- mit Fluor dotiertem Zinndioxid und Indium- und Zinnoxid.

8. Katalytisches Material nach einem der Ansprüche 1 bis 7, **dadurch gekennzeichnet, dass** der Träger des katalytischen Materials eine spezifische Oberfläche von mehr als 75 m²/g aufweist.

9. Verfahren zur Herstellung eines katalytischen Materials nach einem der Ansprüche 1 bis 8, wobei das Verfahren zumindest die folgenden Schritte umfasst:
a) einen Schritt des In-Kontakt-Bringens des Trägers mit mindestens einer Lösung, die mindestens eine Vorstufe des mindestens einen Metalls der Gruppe VIB enthält;
b) einen Schritt des In-Kontakt-Bringens des Trägers mit mindestens einer Lösung, die mindestens eine Vorstufe des mindestens einen Metalls der Gruppe IVB enthält;
wobei die Schritte a) und b) in beliebiger Reihenfolge oder gleichzeitig durchgeführt werden;
c) einen Schritt des Trocknens nach Abschluss der Abfolge der Schritte a) und b) oder b) und a) bei einer Temperatur von weniger als 250 °C ohne einen anschließenden Calcinierungsschritt;
d) einen Schritt der Sulfidierung des nach Abschluss von Schritt c) erhaltenen Materials bei einer Temperatur zwischen 100 °C und 600 °C.

10. Verfahren nach Anspruch 9, wobei die Vorstufe des mindestens einen Metalls der Gruppe VIB ausgewählt ist aus:
Polyoxometallaten, die der Formel (HₙXₓMₘO_{y})^{q-} entsprechen, wobei H Wasserstoff ist, X ein Element ist, das aus Phosphor (P), Silicium (Si), Bor (B) ausgewählt ist, wobei das Element allein genommen wird, M ein oder mehrere Elemente ist, das (die) ausgewählt ist (sind) aus Molybdän (Mo), Wolfram (W), wobei O Sauerstoff ist, h eine ganze Zahl zwischen 0 und 12 ist, x eine ganze Zahl zwischen 0 und 4 ist, m eine ganze Zahl gleich 5, 6, 7, 8, 9, 10, 11, 12 oder 18 ist, y eine ganze Zahl zwischen 17 und 72 ist und q eine ganze Zahl zwischen 1 und 20 ist;
Salzen von Vorstufen der Elemente der Gruppe VIB und organischen oder anorganischen Vorstufen auf der Basis von Mo oder W.

11. Verfahren nach den Ansprüchen 9 oder 10, wobei die Vorstufe des mindestens einen Metalls der Gruppe IVb aus Zirconium-, Hafnium- und Titanalkoxiden, Zirconiumhydroxid, Hafniumhydroxid, Hafniumoxalat, Hafniumnitrat und Hafniumsulfat ausgewählt ist.

12. Verfahren nach einem der Ansprüche 9 bis 11, wobei nach Schritt a) und/oder b) und vor Schritt c) ein Reifungsschritt bei einer Temperatur zwischen 10 und 50 °C während eines Zeitraums von weniger als 48 Stunden durchgeführt wird.

13. Verfahren zur Herstellung einer Elektrode, das zumindest die folgenden Schritte umfasst:
1) das Lösen mindestens eines ionenleitfähigen Polymerbindemittels in einem Lösungsmittel oder einem Lösungsmittelgemisch;
2) das Zugeben mindestens eines katalytischen Materials nach einem der Ansprüche 1 bis 8 oder eines katalytischen Materials, das nach einem der Ansprüche 9 bis 12 erhalten wurde, in Form eines Pulvers zu der in Schritt 1) erhaltenen Lösung, wodurch ein Gemisch erhalten wird;
wobei die Schritte 1) und 2) in beliebiger Reihenfolge oder gleichzeitig durchgeführt werden;
3) das Abscheiden des in Schritt 2) erhaltenen Gemisches auf einem metallischen leitfähigen Träger oder Kollektor

14. Elektrolysevorrichtung, die eine Anode, eine Kathode, einen Elektrolyten umfasst, wobei die Vorrichtung **dadurch gekennzeichnet ist, dass** es sich bei mindestens einer der Anode oder der Kathode um eine Elektrode handelt, die gemäß dem Herstellungsverfahren nach Anspruch 13 erhalten worden ist.

15. Verwendung einer Elektrolysevorrichtung nach Anspruch 14 bei elektrochemischen Reaktionen, wobei die Vorrichtung verwendet wird als:
- Vorrichtung zur Elektrolyse von Wasser zur Erzeugung eines Gasgemisches von Wasserstoff und Sauerstoff und/oder zur Erzeugung nur von Wasserstoff;
- Vorrichtung zur Elektrolyse von Kohlendioxid zur Erzeugung von Ameisensäure;
- Vorrichtung zur Elektrolyse von Stickstoff zur Erzeugung von Ammoniak;
- Brennstoffzellenvorrichtung zur Elektrizitätserzeugung aus Wasserstoff und Sauerstoff.

## Claims

1. Catalytic material comprising an active phase comprising at least one group VIB metal at least partly in sulfide form, at least one group IVB metal at least partly in sulfide form, and an electrically conductive support wherein said group VIB metal is chosen from molybdenum and/or tungsten, said group IVB metal is chosen from titanium, zirconium and/or hafnium.

2. Catalytic material according to Claim 1, **characterized in that** when the group VIB metal is molybdenum, the molybdenum content is between 4% and 60% by weight of molybdenum element relative to the weight of the catalytic material.

3. Catalytic material according to Claim 1, **characterized in that** when the group VIB metal is tungsten, the tungsten content is between 7% and 70% by weight of tungsten element relative to the weight of the catalytic material.

4. Catalytic material according to any one of Claims 1 to 3, **characterized in that** the content of group IVB metal is between 0.1% and 25% by weight of group IVB element relative to the total weight of the catalytic material.

5. Catalytic material according to any one of Claims 1 to 4, **characterized in that** the active phase is chosen from the group formed by the combinations of the elements titanium-molybdenum, zirconium-molybdenum, hafnium-molybdenum, titanium-zirconium-molybdenum, titanium-hafnium-molybdenum, zirconium-hafnium-molybdenum, titanium-tungsten, zirconium-tungsten, hafnium-tungsten, titanium-zirconium-tungsten, titanium-hafnium-tungsten, zirconium-hafnium-tungsten, titanium-molybdenum-tungsten, zirconium-molybdenum-tungsten and hafnium-molybdenum-tungsten.

6. Catalytic material according to any one of Claims 1 to 5, further comprising a dopant material chosen from boron, phosphorus and silicon.

7. Catalytic material according to any one of Claims 1 to 6, wherein the electrically conductive support is chosen from:
- carbon black, graphite, carbon nanotubes and graphene;
- nickel, gold, copper, silver, titanium and silicon;
- fluorine-doped tin dioxide and indium tin oxide.

8. Catalytic material according to any one of Claims 1 to 7, **characterized in that** the support of the catalytic material has a specific surface area of greater than 75 m²/g.

9. Process for preparing a catalytic material according to any one of Claims 1 to 8, said process comprises at least one the following steps:
a) a stage of bringing said support into contact by at least one solution containing at least one precursor of at least one metal from group VIB;
b) a step of bringing said support into contact with at least one solution containing at least one precursor of at least one group IVB metal;
steps a) and b) being carried out in any order or simultaneously;
c) a drying step on conclusion of the sequence of steps a) and b) or b) and a), at a temperature below 250°C, without a subsequent calcination step;
d) a stage of sulfurization of the material obtained on conclusion of stage c) at a temperature of between 100°C and 600°C.

10. Process according to Claim 9, wherein said precursor of at least one group VIB metal is chosen from:
polyoxometalates corresponding to the formula (HₙXₓMₘO_{y})^{q-} wherein H is hydrogen, X is an element chosen from phosphorus (P), silicon (Si) and boron (B), said element being taken alone, M is one or more elements chosen from molybdenum (Mo) and tungsten (W), O being oxygen, h being an integer between 0 and 12, x being an integer between 0 and 4, m being an integer equal to 5, 6, 7, 8, 9, 10, 11, 12 or 18, y being an integer between 17 and 72 and q being an integer between 1 and 20;
salts of precursors of the group VIB elements; and
organic or inorganic precursors based on Mo or W.

11. Process according to Claim 9 or 10, wherein said precursor of at least one group IVB metal is chosen from alkoxides of zirconium, hafnium and titanium, zirconium hydroxide, hafnium hydroxide, hafnium oxalate, hafnium nitrate and hafnium sulfate.

12. Process according to any one of Claims 9 to 11, wherein a maturation step is carried out after step a) and/or b), and before step c), at a temperature of between 10°C and 50°C for a period of time of less than 48 hours.

13. Process for preparing an electrode, comprising at least the following steps:
1) dissolving at least one ionic conductive polymer binder in a solvent or a solvent mixture;
2) adding at least one catalytic material according to any one of Claims 1 to 8 or a catalytic material obtained according to any one of Claims 9 to 12, in powder form, to the solution obtained in step 1) in order to obtain a mixture;
steps 1) and 2) being carried out in any order or simultaneously;
3) depositing the mixture obtained in step 2) on a metallic conductive support or collector.

14. Electrolysis device comprising an anode, a cathode and an electrolyte, said device being **characterized in that** one at least of the anode or of the cathode is an electrode obtained according to the preparation process according to Claim 13.

15. Use of the electrolysis device according to Claim 14 in electrochemical reactions, wherein said device is used as:
- water electrolysis device for the production of a gaseous mixture of hydrogen and oxygen and/or the production of hydrogen alone;
- carbon dioxide electrolysis device for the production of formic acid;
- nitrogen electrolysis device for the production of ammonia;
- fuel cell device for the production of electricity from hydrogen and oxygen.
